# FASCICULE DE BREVET EUROPEEN

(11) **EP 2 179 788 B1**
(45) Date de publication et mention de la délivrance du brevet: **28.09.2011**
(21) Numéro de dépôt: 08018612.5
(22) Date de dépôt: 24.10.2008
(51) Int. Cl.: B01J 19/00, B01J 19/18, B01F 7/18, F16J 15/00

(54) **Appareillage à cuve d'agitation**
Gerät mit Rührbottich
Device with mixing vessel

(43) Date de publication de la demande: 28.04.2010
(73) Titulaire: BIAZZI SA, 1807 Blonay (CH)
(72) Inventeur: Hayoz, Bernard, 1804 Corsier (CH); Egloff, Serge, 1800 Vevey (CH); Mühlemann, Moritz, 1820 Territet (CH)
(74) Mandataire: Micheli & Cie SA

(56) Documents cités:
- EP-A- 0 633 060
- EP-A- 0 974 395
- DE-A1- 4 327 805

## Description

La présente invention concerne le domaine des appareillages à cuve d'agitation.

Un tel appareillage peut être un réacteur chimique comportant une cuve d'agitation dans laquelle se déroulent des réactions chimiques, tel qu'un réacteur sous pression ou un réacteur sous vide ou un réacteur à pression ambiante.

En particulier il peut s'agir d'un réacteur du type utilisé pour la mise en oeuvre de réactions chimiques telles que les réactions liquide-solide, les réactions gaz-liquide-solide, ou les réactions gaz-liquide, parmi lesquelles on peut citer les réactions liquide-solide, les réactions gaz-liquide-solide, parmi lesquelles on peut citer l'hydrogénation, l'oxygénation, la carbonylation, l'oxydation, la chloruration, la phosgénation, etc. En chimie, les procédés qui font intervenir des réactions gaz-liquide sont extrêmement nombreux. Pour assurer le contact entre un liquide et un gaz réactif, une solution habituellement utilisée consiste à introduire le gaz réactif dans une cuve d'agitation contenant le liquide. Une agitation du liquide a pour effet de disperser le gaz sous forme de bulles. D'une manière générale, il est recherché que la taille de ces bulles de gaz soit la plus petite possible afin d'augmenter la surface de transfert entre le gaz et le liquide.

Un appareillage à cuve d'agitation peut également être un appareillage doté d'une cuve d'agitation dans laquelle ne se déroule aucune réaction chimique, comme par exemple un réservoir de préparation ayant une cuve d'agitation dans laquelle sont préparés des produits ou des mélanges de produits avant d'être mis en présence dans un réacteur, ou encore un réservoir intermédiaire ayant une cuve d'agitation dans laquelle sont stockés des produits.

De manière classique, l'appareillage est doté d'une cuve d'agitation, et un agitateur est disposé à une extrémité inférieure d'un arbre tournant s'étendant verticalement à l'intérieur de ladite cuve d'agitation. L'arbre tournant est porté par des paliers et entraîné en rotation par un dispositif d'entraînement, disposé à l'extérieur de la cuve d'agitation dans un carter, définissant un « environnement d'entraînement ». La cuve d'agitation définit quant à elle un « environnement de produits ».

Dans ce type d'appareillage à cuve d'agitation, il est nécessaire de contrôler les échanges de produits entre l'environnement de produits et l'environnement d'entraînement. Par exemple, lorsqu'il s'agit d'un réacteur chimique et que des réactions chimiques qui se produisent dans la cuve d'agitation mettent en oeuvre des solvants, il existe un risque que des vapeurs de solvant s'échappent vers l'environnement d'entraînement et provoquent la corrosion des paliers d'entraînement. Ou alors, lorsque des produits solides sont mis en oeuvre dans les réactions chimiques, si des particules solides provenant de l'environnement de produits migrent dans l'environnement d'entraînement, elles risquent d'endommager les paliers d'entraînement. Ou encore, lorsque les réactions chimiques concernent le domaine pharmaceutique ou le domaine agroalimentaire, si des substances de l'environnement d'entraînement migrent vers la cuve d'agitation, elles risquent de polluer l'environnement de produits. Ces situations, non limitatives, démontrent qu'il est nécessaire d'empêcher le passage de gaz et/ou de vapeurs et/ou de particules solides, d'une part de l'environnement de produits vers l'environnement d'entraînement, et d'autre part de l'environnement d'entraînement vers l'environnement de produits.

Un but de la présente invention est de proposer un appareillage à cuve d'agitation, doté de moyens permettent de remédier aux inconvénients énoncés ci-dessus.

L'invention se rapporte à un appareillage à cuve d'agitation du type comportant un arbre tournant entraînant un agitateur en rotation axiale dans une cuve d'agitation, ledit arbre tournant étant entraîné par un dispositif d'entraînement, dans lequel ladite cuve d'agitation définit un environnement de produits tandis que ledit dispositif d'entraînement définit un environnement d'entraînement. Selon l'invention, l'appareillage à cuve d'agitation comporte un dispositif de séparation, destiné à séparer ledit environnement de produits et ledit environnement d'entraînement l'un de l'autre, qui comporte un conduit de transport de forme hélicoïdale débouchant dans ladite cuve d'agitation.

Des formes d'exécution particulières de l'appareillage à cuve d'agitation selon l'invention sont définies dans les revendications dépendantes 2 à 14.

L'invention sera mieux comprise à la lecture de la description détaillée qui va suivre, de modes de réalisation particuliers du dispositif de séparation et de l'appareillage à cuve d'agitation le comportant, fournis à titre illustratif et nullement limitatif, en référence aux dessins annexés, dans lesquels :
- la figure 1 est une vue en coupe longitudinale représentant, de manière schématique, un appareillage à cuve d'agitation et son dispositif de séparation ;
- les figures 2, 3, 4, 5 et 6 sont des vues en coupe longitudinale représentant, respectivement, un premier mode de réalisation, un deuxième mode de réalisation, un troisième mode de réalisation, un quatrième mode de réalisation et un cinquième mode de réalisation d'un dispositif de séparation ;
- les figures 7 et 8 sont des vues analogues à la figure 2, pour deux variantes de réalisation du dispositif de séparation.

Le mode de réalisation, non limitatif, de l'appareillage à cuve d'agitation qui est illustré aux figures est un réacteur chimique, pour lequel la cuve d'agitation constitue une chambre de confinement contenant un milieu de réaction dans lequel se déroule(nt) une(des) réaction(s) chimique(s).

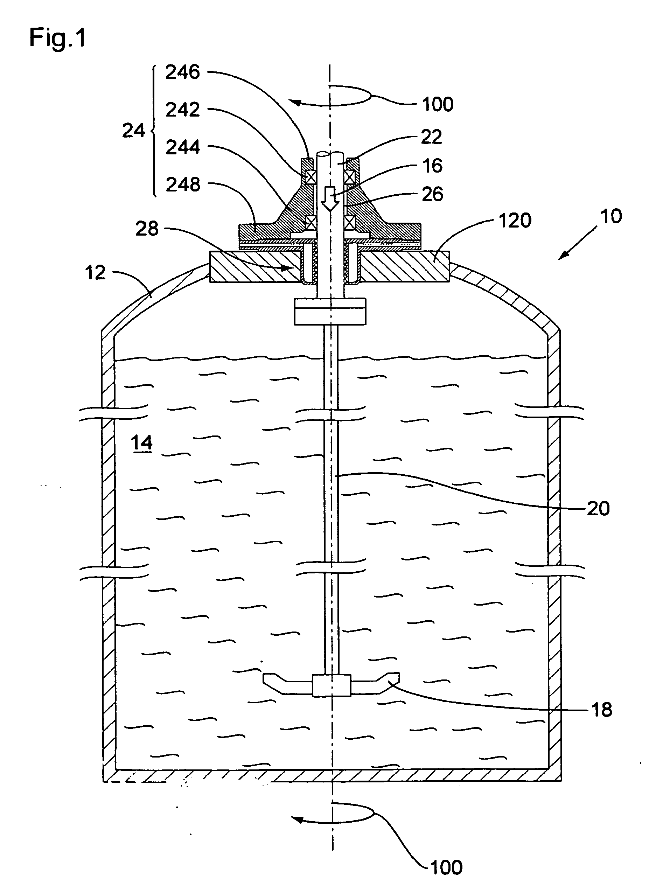

En se référant tout d'abord à la figure 1, il est représenté de manière très schématique un appareillage à cuve d'agitation 10 du type réacteur chimique ayant une cuve d'agitation 12 remplie d'un milieu désigné par le repère 14, dans lequel se produisent des réactions chimiques. Le milieu 14 est constitué de plusieurs produits dont certains réagissent entre eux, comme par exemple un liquide réactif et un gaz réactif, ou bien deux liquides réactifs, ou encore un liquide réactif et un solide réactif, ou encore une combinaison des produits précédents. Le milieu 14 peut aussi comporter des produits qui ne participent pas à la réaction chimique, comme par exemple un ou plusieurs gaz inerte(s). Pour simplifier la figure 1, les moyens d'introduction des différents produits dans la cuve d'agitation 12 n'ont pas été représentés.

Un agitateur 18, agencé à l'extrémité d'une tige 20 disposée verticalement dans la cuve d'agitation 12, est entraîné en rotation axiale, comme indiqué par la flèche 100, et entretient l'agitation du milieu 14.

A l'extérieur de la cuve d'agitation 12, la tige 20 est portée par un arbre 22 qui lui est coaxial et qui tourne dans un palier 24 sous l'action d'un organe d'entraînement, par exemple un moteur d'entraînement (non représenté). Le palier 24 autorise une rotation axiale de l'arbre 22 et absorbe les forces axiales et radiales s'exerçant sur celui-ci. Il comporte un corps de palier 246, sensiblement cylindrique, portant des roulements 242, 244 et se prolongeant vers le bas par un flasque de palier 248 s'étendant suivant un plan sensiblement perpendiculaire à la direction de l'arbre 22. Entre le corps de palier 246 et l'arbre 22 est ménagé un espace annulaire 26. Dans certains cas, cet espace annulaire 26 peut servir de passage pour un gaz réactif et/ou pour un gaz inerte qui circule comme indiqué par la flèche 16, avant d'être acheminé dans la cuve d'agitation 12.

Un dispositif de séparation 28 est disposé sous le palier 24 à l'endroit où l'arbre tournant 22 pénètre dans la cuve d'agitation 12. Il constitue une séparation, le long de l'arbre tournant 22, entre l'environnement de produits se trouvant dans la cuve d'agitation 12 et l'environnement d'entraînement se trouvant à l'extérieur de celle-ci. Une bride de liaison 120 reliée à la paroi de la cuve d'agitation 12 sert de support au dispositif de séparation 28.

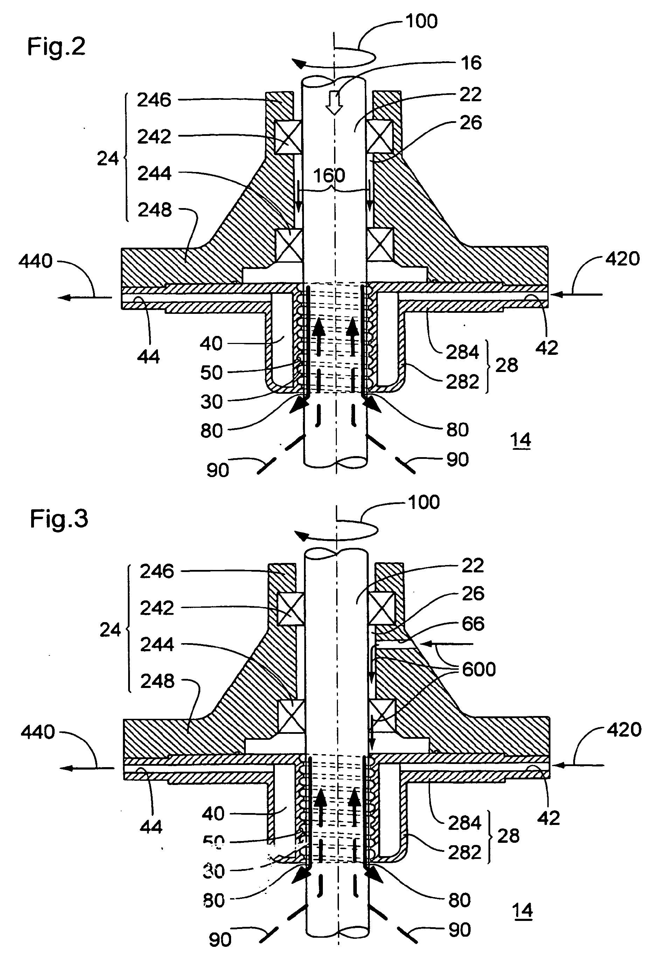

On va décrire un premier mode de réalisation du dispositif de séparation 28, en référence à la figure 2.

Le dispositif de séparation 28 comporte un corps de séparation 282 et un flasque de séparation 284. Le flasque de séparation 284 s'étend suivant un plan sensiblement perpendiculaire à la direction de l'arbre 22. Il est fixé de manière étanche au flasque de palier 248, par des moyens de fixation classiques, non représentés, comportant, par exemple, des vis et un joint torique.

Le corps de séparation 282 s'étend autour de l'arbre 22, la distance entre ces deux pièces étant déterminée comme étant la plus faible possible. Le corps de séparation 282 comporte, sur sa face en regard de l'arbre 22, une rainure hélicoïdale 50 qui définit un conduit de transport 30 entre l'arbre 22 et le corps de séparation 282. Le conduit de transport 30 débouche à l'une de ses extrémités dans l'espace annulaire 26 et à son autre extrémité dans la cuve d'agitation 12.

La forme en spirale du conduit de transport 30 et la rotation de l'arbre 22 permettent à des vapeurs et/ou des gouttelettes de liquide et/ou des particules solides d'être acheminées de l'environnement de produits vers l'environnement d'entraînement, ou de l'environnement d'entraînement vers l'environnement de produit. Le sens de la spirale du conduit de transport 30 est déterminé en fonction du sens de rotation de l'arbre 22 et en fonction du sens de l'écoulement souhaité.

Le dispositif de séparation 28 peut comporter, en outre, des moyens de transfert de chaleur 40, 42, 44 pour abaisser la température desdites vapeurs et/ou gouttelettes et/ou particules, au moment où celles-ci traversent le conduit de transport 30.

Les moyens de transfert de chaleur 40, 42, 44 comportent une cavité annulaire 40 ménagée dans le corps de séparation 282, qui est reliée à un conduit d'entrée 42 et à un conduit de sortie 44, et qui s'étend de préférence le long de toute la longueur linéaire du conduit de transport 30. Ainsi, une circulation de fluide thermique est réalisée dans la cavité annulaire 40. Le fluide thermique peut être un gaz ou un liquide, ce liquide pouvant être de l'eau. Il est introduit dans le conduit d'entrée 42, comme indiqué par la flèche 420, à une température inférieure à la température qui règne dans le conduit de transport 30, celui-ci étant en contact avec l'arbre tournant 22. Au sein de la cavité annulaire 40, le fluide thermique s'échauffe par échange de chaleur avec la paroi fine du corps de séparation 282 autour du conduit de transport 30. Puis il est évacué par le conduit de sortie 44, comme indiqué par la flèche 440. Le conduit d'entrée 42 et le conduit de sortie 44 sont reliés à un circuit extérieur de fluide thermique, non représenté. La circulation du fluide d'échange thermique a pour effet d'abaisser la température de la paroi fine du corps de séparation 282, et par suite d'abaisser la température des gaz, réactifs ou inertes, et/ou des vapeurs qui sont acheminés dans le conduit de transport 30. Par suite, les vapeurs sont amenées à se condenser, et à se transformer en gouttelettes.

Le fonctionnement du dispositif de séparation 28 est le suivant. On se place dans une utilisation de l'appareillage à cuve d'agitation 10 dans laquelle un gaz, qui peut être un gaz réactif ou un gaz inerte selon l'utilisation concernée, est introduit au niveau de l'environnement d'entraînement ou en amont de celui-ci comme indiqué par la flèche 16, pour être acheminé dans la cuve d'agitation 12, par exemple le long de l'arbre 22 comme indiqué par les flèches 160. Le gaz introduit est transporté dans la rainure hélicoïdale 50 jusqu'à la cuve d'agitation 12. Ce flux de gaz ainsi canalisé a pour effet de s'opposer à une remontée de substances indésirables telles que des gaz et/ou des vapeurs, condensées ou non, et/ou des particules solides provenant de la cuve d'agitation 12, comme indiqué par les flèches en traits discontinus 90. Ces substances indésirables sont renvoyées vers la cuve d'agitation 12, comme indiqué par les flèches 80. Ainsi l'environnement d'entraînement est protégé d'une remontée de telles substances provenant de l'environnement de produits.

Une telle configuration est intéressante lorsque, par exemple, la cuve d'agitation 12 est une chambre de confinement d'un réacteur chimique, dans laquelle se déroulent des réactions chimiques mettant en oeuvre des produits corrosifs pour l'environnement d'entraînement.

On va maintenant décrire un deuxième mode de réalisation du dispositif de séparation 28, en référence à la figure 3.

Ce dispositif de séparation 28 est analogue au premier mode de réalisation qui a été décrit en référence à la figure 2. Il en diffère uniquement en ce qu'il comporte, en outre, des moyens de rinçage.

Les moyens de rinçage comportent au moins un conduit d'injection 66 pour injecter un fluide de rinçage destiné à circuler dans le conduit de transport 30. Ce conduit d'injection 60 est disposé en amont du conduit de transport 30 dans le sens de circulation souhaité des gaz et/ou des vapeurs qui sont transportés. Sur l'exemple illustré à la figure 3, le conduit d'injection 66 est disposé à travers le corps de palier 246 entre les deux paliers 242, 244, et amène le fluide de rinçage dans l'espace annulaire 26 comme indiqué par la flèche 600. Il est relié, à l'extérieur du corps de palier 246, à un circuit d'alimentation en fluide de rinçage, non représenté.

Selon une variante (non représentée), les moyens de rinçage comportent deux conduits d'injection, l'un pour injecter un gaz de rinçage et l'autre pour injecter un liquide de rinçage. Dans ce cas, les deux fluides de rinçage peuvent être injectés simultanément, ou l'un après l'autre. Il peut aussi être envisagé un rinçage permanent au moyen d'un gaz inerte.

Des moyens de commande, connus en soi, peuvent être prévus pour commander l'ouverture ou la fermeture du(des) conduit(s) d'injection.

Dans l'exemple illustré à la figure 3, l'action du flux de fluide de rinçage a pour effet de s'opposer à la remontée de gaz et/ou de vapeurs provenant de la cuve d'agitation 12, par les flèches en traits discontinus 90, et qui sont renvoyés vers la cuve d'agitation 12, comme indiqué par les flèches 80. Le fluide de rinçage peut être un gaz, comme par exemple l'azote, ou un liquide, comme par exemple l'eau ou un solvant.

Un débit approprié du fluide de rinçage garantit qu'il s'écoule bien dans le sens souhaité.

Une telle configuration est intéressante lorsque, par exemple, l'utilisation de l'appareillage à cuve d'agitation 10 ne prévoit pas l'introduction d'un gaz comme indiqué par la flèche 16 à la figure 2. Une telle configuration est également intéressante lorsque l'introduction d'un gaz (flèche 16) est prévue mais que le débit de ce gaz introduit est trop faible pour s'opposer efficacement à la remontée de substances non souhaitées depuis l'environnement de produits vers l'environnement d'entraînement. Une telle configuration est encore intéressante lorsque le gaz introduit (flèche 16) est un gaz réactif, son débit étant stoppé en fin de réaction, alors que la(les) réaction(s) chimique(s) se poursui(ven)t dans l'environnement de produits et génère(nt) encore des gaz et/ou vapeurs indésirables susceptibles de migrer vers l'environnement d'entraînement. Une telle configuration est également intéressante pour nettoyer le dispositif de séparation entre deux réactions ou en fin de production.

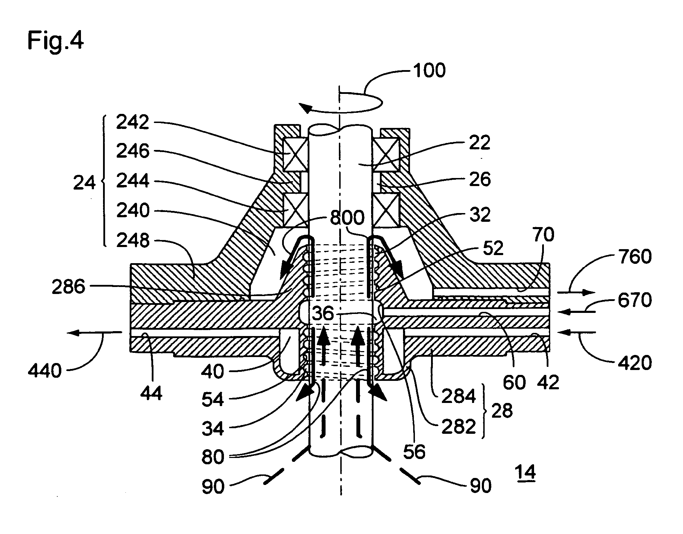

On va maintenant décrire un troisième mode de réalisation d'un dispositif de séparation 28, en référence à la figure 4 et uniquement pour ses différences par rapport au deuxième mode de réalisation de la figure 3.

Dans ce mode de réalisation, le conduit de transport 30 n'est pas formé d'un seul tronçon, mais il est formé de deux tronçons successifs 32, 34 séparés par une région annulaire intermédiaire 36. Ces deux tronçons 32, 34 sont formés respectivement par une première rainure hélicoïdale 52 et par une deuxième rainure hélicoïdale 54, ménagées toutes deux dans le corps de séparation 282 en regard de l'arbre tournant 22. Les sens de ces deux rainures hélicoïdales 52, 54 sont inversés. La région annulaire intermédiaire 36 est formée par une gorge 56 présentant, sur l'exemple illustré, une profondeur supérieure à celle des rainures hélicoïdales 52, 54. La disposition du deuxième tronçon 34 est sensiblement analogue à celle du tronçon unique du premier mode de réalisation. Le premier tronçon 32 est quant à lui disposé sur la face intérieure d'une excroissance centrale 286 de forme sensiblement conique du corps de séparation 282, cette excroissance centrale 286 s'étendant vers le haut. En regard de la face extérieure de cette excroissance centrale 286, le corps de palier 246 présente une cavité centrale 240 de forme sensiblement conique dans laquelle débouche au moins un conduit d'évacuation 70 qui traverse le flasque de palier 248 et communique avec un circuit extérieur, non représenté.

Le flasque de séparation 284 est traversé par au moins un conduit d'injection 60 qui communique avec un circuit extérieur, non représenté, et qui débouche dans la région annulaire intermédiaire 36.

La circulation du fluide de rinçage est la suivante. Le conduit d'injection 60 amène le fluide de rinçage, comme indiqué par la flèche 670, entre les deux tronçons 32, 34, dans la région annulaire intermédiaire 36. Du fait de la rotation de l'arbre tournant 22 et des orientations inversées l'une par rapport à l'autre des rainures 52, 54 formant les deux tronçons 32, 34 du conduit de transport 30, le fluide de rinçage amené par le conduit d'injection 60 est scindé en deux parties.

Une partie du fluide de rinçage est dirigée vers le bas, dans le deuxième tronçon 34, comme indiqué par les flèches 80, et s'oppose à la remontée vers l'environnement d'entraînement de substances non souhaitées provenant de la l'environnement de produits, comme représenté par les flèches 90 en traits discontinus. Ces substances, gaz et/ou vapeurs, sont renvoyées vers la cuve d'agitation 12 avec le fluide de rinçage, comme représenté par les flèches 80. Le deuxième tronçon 34 du conduit de transport 30 joue un rôle analogue à celui du tronçon unique du deuxième mode de réalisation. Il achemine le fluide de rinçage vers la cuve d'agitation 12 (flèches 80).

Une autre partie du fluide de rinçage est dirigée vers le haut, dans le premier tronçon 32, comme indiqué par les flèches 800. Elle s'engouffre ensuite dans la cavité centrale 240 du palier 24 sous l'effet des forces centrifuges générées par la rotation de l'arbre 22. Puis elle est évacuée par le conduit d'évacuation 70 comme indiqué par la flèche 760, sous l'effet de la gravitation. Le conduit d'évacuation 70 peut être relié à un récipient de collecte, non représenté, qui peut être par exemple un récipient sous pression, et qui peut être régulièrement ouvert pour permettre le drainage des fluides collectés. Cette partie du fluide de rinçage s'oppose à la descente vers la cuve d'agitation 12 de substances potentiellement polluantes ou dangereuses qui proviennent du palier 24 et plus généralement de l'environnement d'entraînement, voire même de l'atmosphère extérieure. Le premier tronçon 32 joue un rôle complémentaire de celui du deuxième tronçon 34. Il contribue à évacuer vers l'extérieur les vapeurs et/ou gouttelettes et/ou particules qui n'ont pas été acheminées vers la cuve d'agitation par le premier tronçon 32.

Là encore, un débit approprié du fluide de rinçage garantit qu'il s'écoule bien dans le sens souhaité.

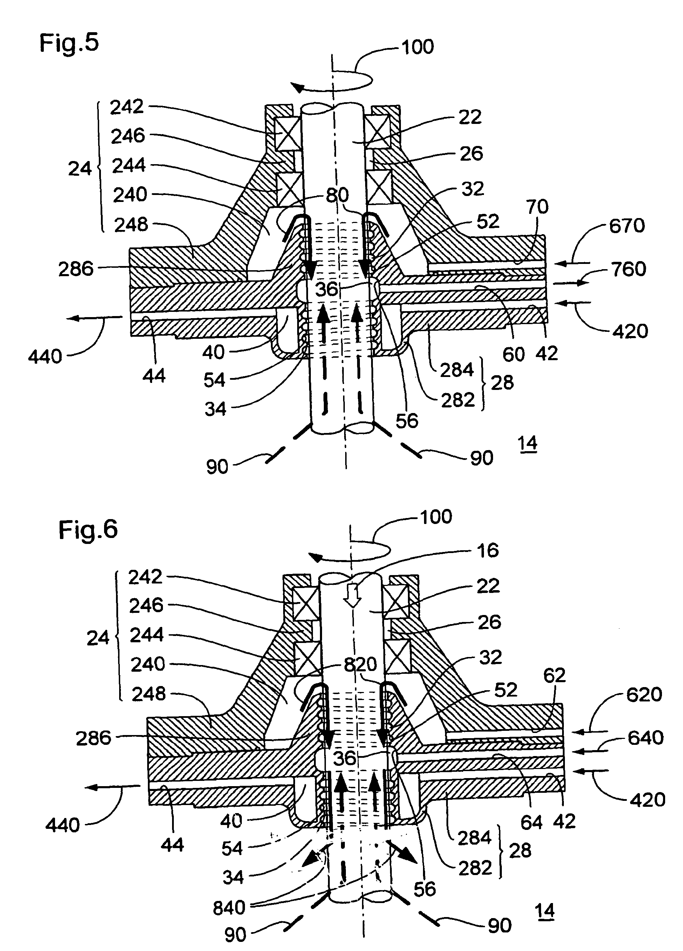

On va maintenant décrire un quatrième mode de réalisation d'un dispositif de séparation 28, en référence à la figure 5 et uniquement pour ses différences par rapport au troisième mode de réalisation de la figure 4.

Comme dans le troisième mode de réalisation, le conduit de transport 30 est formé de deux tronçons successifs 32 et 34 séparés par une région annulaire intermédiaire 36.

Le premier tronçon 32 et le deuxième tronçon 34 sont formés respectivement par une première rainure hélicoïdale 52 et une deuxième rainure hélicoïdale 54 ayant des sens inversés par rapport à ceux des rainures hélicoïdales 52, 54 du dispositif de séparation 28 du troisième mode de réalisation.

Avec le dispositif de séparation 28 du quatrième mode de réalisation, la circulation du fluide de rinçage est inversée par rapport à celle du troisième mode de réalisation. A cet effet, le conduit 60 devient un conduit d'évacuation tandis que le conduit 70 devient un conduit d'injection.

La circulation du fluide de rinçage est la suivante. Le conduit d'injection 70 amène le fluide de rinçage, comme indiqué par la flèche 670, dans la cavité centrale 240 du palier 24. Le fluide de rinçage s'écoule dans le premier tronçon 32, comme indiqué par les flèches 80. Il arrive ensuite dans la région annulaire intermédiaire 36 sous l'effet des forces centrifuges générées par la rotation de l'arbre 22 d'où il est ensuite évacué au moyen du conduit d'évacuation 60, sous l'effet de la gravitation. Entre la cavité centrale 240 et le premier tronçon 32 du conduit de transport 30, le fluide de rinçage peut s'être chargé de substances fluides et/ou de particules solides provenant de l'environnement d'entraînement, qui sont également évacuées vers l'extérieur en même temps que le fluide de rinçage. Lorsqu'il traverse la région annulaire intermédiaire 36, le fluide de rinçage se mêle aux gaz et/ou vapeurs provenant de l'environnement de produits, comme indiqué par les flèches 90 en traits discontinus, qui sont également évacués vers l'extérieur avec le fluide de rinçage.

Là encore, un débit approprié du fluide de rinçage garantit qu'il s'écoule bien dans le sens souhaité.

On va maintenant décrire un cinquième mode de réalisation d'un dispositif de séparation 28, en référence à la figure 6 et uniquement pour ses différences par rapport au troisième mode de réalisation de la figure 4.

Le conduit de transport 30 est, là aussi, formé de deux tronçons successifs 32, 34 séparés par une région annulaire intermédiaire 36, et formés respectivement par une première rainure hélicoïdale 52 et par une deuxième rainure hélicoïdale 54 ayant des sens identiques.

Le flasque de palier 248 est traversé par au moins un premier conduit d'injection 62 qui communique avec un premier circuit extérieur, non représenté, et qui débouche dans la cavité centrale 240. Le flasque de séparation 284 est traversé par au moins un deuxième conduit d'injection 64 qui communique avec un deuxième circuit extérieur, non représenté, et qui débouche dans la région annulaire intermédiaire 36. Les deux circuits extérieurs peuvent être confondus en un même circuit extérieur ou être des circuits distincts. S'ils sont distincts, ils peuvent contenir le même fluide de rinçage ou des fluides de rinçage différents l'un de l'autre.

Le fonctionnement du dispositif de séparation 28 est le suivant. On se place dans une utilisation de l'appareillage à cuve d'agitation 10 dans laquelle un gaz, qui peut être un gaz réactif ou un gaz inerte selon l'utilisation souhaitée, est introduit au niveau de l'environnement d'entraînement ou en amont de celui-ci pour être acheminé dans la cuve d'agitation 12, par exemple le long de l'arbre 22 comme indiqué par la flèche 16.

Le premier conduit d'injection 62 amène un premier fluide de rinçage, comme indiqué par la flèche 620, dans la cavité centrale 240. A la sortie de la cavité centrale 240, le premier fluide de rinçage est empêché de se diriger vers l'environnement d'entraînement car la présence du flux de gaz représenté par la flèche 16 s'y oppose. Le premier fluide de rinçage est donc canalisé dans le premier tronçon 32 du conduit de transport 30 en direction de la région annulaire intermédiaire 36, comme indiqué par les flèches 820.

Le deuxième conduit d'injection 64 amène un deuxième fluide de rinçage dans la région annulaire intermédiaire 36, comme indiqué par la flèche 640. Le deuxième fluide de rinçage est empêché de se diriger vers l'environnement d'entraînement car la présence cumulée du flux de gaz représenté par la flèche 16 et du flux du premier fluide de rinçage s'y oppose. Le deuxième fluide de rinçage est donc canalisé dans le deuxième tronçon 34 du conduit de transport 30 en direction de la cuve d'agitation 12, comme indiqué par les flèches 840.

Le sens de rotation de l'arbre tournant 22 et l'orientation commune des rainures 52, 54 formant les deux tronçons 32, 34 du conduit de transport 30 sont déterminée de telle sorte que le premier fluide de rinçage et le deuxième fluide de rinçage soient acheminés suivant la même direction axiale, de l'emplacement à partir duquel ils entrent au contact de l'arbre 22 vers la cuve d'agitation 12.

Les actions cumulées des deux fluides de rinçage et du flux de gaz représenté par la flèche 16 s'opposent à la remontée vers l'environnement d'entraînement de substances non souhaitées provenant de la l'environnement de produits, comme représenté par les flèches 90 en traits discontinus. Ces substances, gaz et/ou vapeurs, sont renvoyées vers la cuve d'agitation 12 avec les fluides de rinçage, comme représenté par les flèches 820, 840.

Là encore, le choix d'un débit approprié des fluides de rinçage par rapport au débit de gaz introduit (flèche 16) garantit que les fluides de rinçage s'écoulent bien dans le sens souhaité.

Les deux fluides de rinçage peuvent être choisis identiques ou distincts. Les deux circuits extérieurs peuvent être identiques ou distincts.

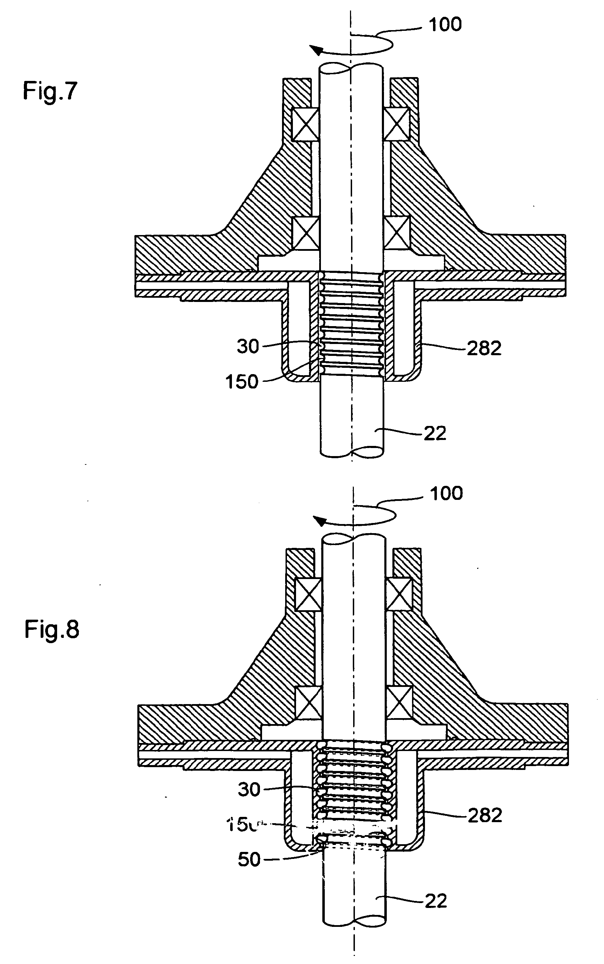

Les figures 7 et 8 représentent des variantes de réalisation du dispositif de séparation 28 selon le premier mode de réalisation de la figure 2, dans lequel le conduit de transport 30 est défini par la paroi extérieure de l'arbre tournant 22 et par une rainure hélicoïdale 50 de la face en regard du corps de séparation 282. Sur la variante de réalisation de la figure 7, le conduit de transport 30 est défini par une rainure hélicoïdale 150 de l'arbre tournant 22 et par la paroi en regard du corps de séparation 282. Sur la variante de réalisation de la figure 8, le conduit de transport 30 est défini par une rainure hélicoïdale 150 de l'arbre tournant 22 et par une rainure hélicoïdale 50 du corps de séparation 282, les deux rainures hélicoïdales 50, 150 étant en regard l'une de l'autre et ayant des sens opposés. Ces deux variantes de réalisation sont compatibles avec le deuxième mode de réalisation (figure 3), avec le troisième mode de réalisation (figure 4) et avec le quatrième mode de réalisation (figure 5).

Bien entendu, l'invention n'est pas limitée aux modes de réalisations qui ont été illustrés aux figures et couvre des variantes de réalisation à la portée de l'homme du métier.

## Revendications

1. Appareillage à cuve d'agitation (10), du type comportant un arbre tournant (22) entraînant un agitateur (18) en rotation axiale dans une cuve d'agitation (12), ledit arbre tournant (22) étant entraîné par un dispositif d'entraînement, dans lequel ladite cuve d'agitation (12) définit un environnement de produits tandis que ledit dispositif d'entraînement définit un environnement d'entraînement, **caractérisé en ce qu'**il comporte un dispositif de séparation (28), destiné à séparer ledit environnement de produits et ledit environnement d'entraînement l'un de l'autre, qui comporte un conduit de transport (30) de forme hélicoïdale débouchant dans ladite cuve d'agitation (12).

2. Appareillage à cuve d'agitation (10) selon la revendication 1, dans lequel ledit conduit de transport (30) est défini par une rainure hélicoïdale (50) formée sur un corps de séparation (282) entourant l'arbre tournant (22) et par la paroi extérieure dudit arbre tournant (22).

3. Appareillage à cuve d'agitation selon la revendication 1, dans lequel ledit conduit de transport (30) est défini par une rainure hélicoïdale (150) formée sur ledit arbre tournant (22) et par la paroi intérieure d'un corps de séparation (282) entourant l'arbre tournant (22).

4. Appareillage à cuve d'agitation (10) selon l'une quelconque des revendications 1 à 3, dans lequel ledit conduit de transport (30) est délimité par une première rainure hélicoïdale (50) formée sur un corps de séparation (282) entourant l'arbre tournant (22) et par une deuxième rainure hélicoïdale (150) formée sur ledit arbre tournant (22).

5. Appareillage à cuve d'agitation (10) selon l'une quelconque des revendications 1 à 4, dans lequel ledit conduit de séparation (30) comporte un unique tronçon (30) continu.

6. Appareillage à cuve d'agitation (10) selon l'une quelconque des revendications 1 à 4, dans lequel ledit conduit de séparation (30) comporte un premier tronçon (32) et un deuxième tronçon (34) agencés successivement le long de l'arbre tournant (22), ces deux tronçons (32, 34) étant formés deux rainures hélicoïdales (52, 54) dont les sens sont inversés.

7. Appareillage à cuve d'agitation (10) selon l'une quelconque des revendications 1 à 4, dans lequel ledit conduit de séparation (30) comporte un premier tronçon (32) et un deuxième tronçon (34) agencés successivement le long de l'arbre tournant (22), ces deux tronçons (32, 34) étant formés deux rainures hélicoïdales (52, 54) dont les sens sont identiques.

8. Appareillage à cuve d'agitation (10) selon l'une quelconque des revendications 1 à 7, dans lequel ledit dispositif de séparation (28) comporte des moyens de transfert de chaleur (40, 42, 44).

9. Appareillage à cuve d'agitation (10) selon la revendication 8, dans lequel lesdits moyens de transfert de chaleur (40, 42, 44) comportent une cavité annulaire (40) agencée dans un corps de séparation (282) entourant l'arbre tournant (22), ainsi qu'un conduit d'entrée (42) destiné à amener un fluide d'échange thermique dans ladite cavité annulaire (40) et un conduit de sortie (44) destiné à évacuer ledit fluide d'échange thermique hors de ladite cavité annulaire (40) après qu'il a été réchauffé par transfert de chaleur à travers une paroi agencée entre ladite cavité annulaire (40) et le conduit de séparation (30).

10. Appareillage à cuve d'agitation (10) selon l'une quelconque des revendications 1 à 9, dans lequel ledit dispositif de séparation (28) comporte des moyens de rinçage (60, 62, 64, 66, 70, 240).

11. Appareillage à cuve d'agitation (10) selon la revendication 10, dans lequel lesdits moyens de rinçage (60, 62, 64, 66, 70, 240) comportent au moins un conduit d'injection (66) pour injecter un fluide de rinçage dans un espace annulaire (26) agencé autour de l'arbre tournant (22), en amont du conduit de séparation (30).

12. Appareillage à cuve d'agitation (10) selon la revendication 11 et la revendication 6 ou 7, dans lequel lesdits moyens de rinçage (60, 62, 64, 66, 70, 240) comportent, une cavité centrale (240) disposée entre l'environnement d'entraînement et le premier tronçon (32).

13. Appareillage à cuve d'agitation (10) selon la revendication 12, dans lequel lesdits moyens de rinçage (60, 62, 64, 66, 70, 240) comportent au moins un conduit (60, 62, 64, 70) débouchant dans ladite cavité centrale (240), pour injecter ou évacuer un fluide de rinçage.

14. Appareillage à cuve d'agitation (10) selon la revendication 12, dans lequel lesdits moyens de rinçage (60, 62, 64, 66, 70, 240) comportent au moins un conduit (60, 64) débouchant dans une région annulaire intermédiaire (36) située entre les deux tronçons (32, 34), pour injecter ou évacuer un fluide de rinçage.

## Claims

1. Mixing vessel apparatus (10) of the type comprising a rotating shaft (22) driving a mixer (18) in axial rotation in a mixing vessel (12), said rotating shaft (22) being driven by a drive device, wherein said mixing vessel (12) defines a product environment whilst said drive device defines a drive environment, **characterised in that** it comprises a separation device (28) intended to separate said product environment and said drive environment from each other, which has a helical transport channel (30) issuing into said mixing vessel (12).

2. Mixing vessel apparatus (10) as claimed in Claim 1, wherein said transport channel (30) is defined by a helical groove (50) formed on a separation body (282) surrounding the rotating shaft (22), and by the outer wall of said rotating shaft (22).

3. Mixing vessel apparatus as claimed in Claim 1, wherein said transport channel (30) is defined by a helical groove (150) formed on said rotating shaft (22), and by the inner wall of a separation body (282) surrounding the rotating shaft (22).

4. Mixing vessel apparatus (10) as claimed in any one of Claims 1 to 3, wherein said transport channel (30) is delimited by a first helical groove (50) formed on a separation body (282) surrounding the rotating shaft (22), and by a second helical groove (150) formed on said rotating shaft (22).

5. Mixing vessel apparatus (10) as claimed in any one of Claims 1 to 4, wherein said separation channel (30) has a single continuous section (30).

6. Mixing vessel apparatus (10) as claimed in any one of Claims 1 to 4, wherein said separation channel (30) has a first section (32) and a second section (34) which are successively arranged along the rotating shaft (22), these two sections (32, 34) being formed [by] two helical grooves (52, 54) whose directions are reversed.

7. Mixing vessel apparatus (10) as claimed in any one of Claims 1 to 4, wherein said separation channel (30) has a first section (32) and a second section (34) which are successively arranged along the rotating shaft (22), these two sections (32, 34) being formed [by] two helical grooves (52, 54) whose directions are identical.

8. Mixing vessel apparatus (10) as claimed in any one of Claims 1 to 7, wherein said separation device (28) has heat transfer means (40, 42, 44).

9. Mixing vessel apparatus (10) as claimed in Claim 8, wherein said heat transfer means (40, 42, 44) have an annular cavity (40) arranged in a separation body (282) surrounding the rotating shaft (22), as well as an inlet channel (42) intended for carrying a heat exchange fluid into said annular cavity (40), and an outlet channel (44) intended for draining said heat exchange fluid from said annular cavity (40) after it has been warmed by heat transfer through a wall arranged between said annular cavity (40) and the separation channel (30).

10. Mixing vessel apparatus (10) as claimed in any one of Claims 1 to 9, wherein said separation device (28) has rinsing means (60, 62, 64, 66, 70, 240).

11. Mixing vessel apparatus (10) as claimed in Claim 10, wherein said rinsing means (60, 62, 64, 66, 70, 240) have at least one injection channel (66) for injecting a rinsing fluid into an annular space (26) arranged around the rotating shaft (22) upstream of the separation channel (30).

12. Mixing vessel apparatus (10) as claimed in Claim 11 and Claim 6 or 7, wherein said rinsing means (60, 62, 64, 66, 70, 240) have a central cavity (240) disposed between the drive environment and the first section (32).

13. Mixing vessel apparatus (10) as claimed in Claim 12, wherein said rinsing means (60, 62, 64, 66, 70, 240) have at least one channel (60, 62, 64, 70) issuing into said central cavity (240) to inject or drain a rinsing fluid.

14. Mixing vessel apparatus (10) as claimed in Claim 12, wherein said rinsing means (60, 62, 64, 66, 70, 240) have at least one channel (60, 64) issuing into an intermediate annular region (36) located between the two sections (32, 34) to inject or drain a rinsing fluid.

## Patentansprüche

1. Gerät mit Rührbottich (10) der Art, die eine drehbare Welle (22) umfasst, die einen Rührer (18) in einer axialen Drehbewegung in einem Rührbottich (12) antreibt, wobei die drehbare Welle (22) durch eine Antriebsvorrichtung angetrieben wird, wobei der Rührbottich (12) eine Produktumgebung bestimmt während die Antriebsvorrichtung eine Antriebsumgebung bestimmt, **dadurch gekennzeichnet, dass** es eine Trennvorrichtung (28) umfasst, die dazu bestimmt ist, die Produktumgebung und die Antriebsumgebung voneinander zu trennen, und die eine spiralförmige Transportleitung (30) umfasst, die in den Rührbottich (12) einmündet.

2. Gerät mit Rührbottich (10) nach Anspruch 1, wobei die Transportleitung (30) durch eine spiralförmige Rille (50), die auf einem Trennkörper (282) gebildet ist, der die drehbare Welle (22) umgibt, und durch die Außenwand der drehbaren Welle (22) bestimmt ist.

3. Gerät mit Rührbottich nach Anspruch 1, wobei die Transportleitung (30) durch eine spiralförmige Rille (150), die auf der drehbaren Welle (22) gebildet ist, und durch die Innenwand eines Trennkörpers (282) bestimmt ist, der die drehbare Welle umgibt (22).

4. Gerät mit Rührbottich (10) nach einem der Ansprüche 1 bis 3, wobei die Transportleitung (30) durch eine erste spiralförmige Rille (50), die auf einem Trennkörper (282) gebildet ist, der die drehbare Welle (22) umgibt, und durch eine zweite spiralförmige Rille (150) abgegrenzt ist, die auf der drehbaren Welle (22) gebildet ist.

5. Gerät mit Rührbottich (10) nach einem der Ansprüche 1 bis 4, wobei die Transportleitung (30) einen einzigen ununterbrochenen Abschnitt (30) umfasst.

6. Gerät mit Rührbottich (10) nach einem der Ansprüche 1 bis 4, wobei die Transportleitung (30) einen ersten Abschnitt (32) und einen zweiten Abschnitt (34) umfasst, die aufeinanderfolgend entlang der drehbaren Welle (22) eingerichtet sind, wobei diese zwei Abschnitte (32, 34) aus zwei spiralförmigen Rillen (52, 54) gebildet sind, deren Richtungen umgekehrt sind.

7. Gerät mit Rührbottich (10) nach einem der Ansprüche 1 bis 4, wobei die Transportleitung (30) einen ersten Abschnitt (32) und einen zweiten Abschnitt (34) umfasst, die aufeinanderfolgend entlang der drehbaren Welle (22) eingerichtet sind, wobei diese zwei Abschnitte (32, 34) aus zwei spiralförmigen Rillen (52, 54) gebildet sind, deren Richtungen identisch sind.

8. Gerät mit Rührbottich (10) nach einem der Ansprüche 1 bis 7, wobei die Trennvorrichtung (28) Wärmeübertragungsmittel (40, 42, 44) umfasst.

9. Gerät mit Rührbottich (10) nach Anspruch 8, wobei die Wärmeübertragungsmittel (40, 42, 44) einen ringförmigen Hohlraum (40), der in einem Trennkörper (282) eingerichtet ist, der die drehbare Welle (22) umgibt, sowie eine Eingangsleitung (42), die dazu bestimmt ist, eine Wärmeaustauschflüssigkeit in den ringförmigen Hohlraum (40) zuzuführen, und eine Ausgangsleitung (44) umfassen, die dazu bestimmt ist, die Wärmeaustauschflüssigkeit aus dem ringförmigen Hohlraum (40) abzuleiten, nachdem sie durch Wärmeaustausch durch eine Wand erwärmt wurde, die zwischen dem ringförmigen Hohlraum (40) und der Transportleitung (30) eingerichtet ist.

10. Gerät mit Rührbottich (10) nach einem der Ansprüche 1 bis 9, wobei die Trennvorrichtung (28) Spülungsmittel (60, 62, 64, 66, 70, 240) umfasst.

11. Gerät mit Rührbottich (10) nach Anspruch 10, wobei die Spülungsmittel (60, 62, 64, 66, 70, 240) mindestens eine Einspritzleitung (66) zum Einspritzen einer Spülflüssigkeit in einen ringförmigen Raum (26) umfassen, der der Transportleitung (30) vorgelagert um die drehbare Welle (22) eingerichtet ist.

12. Gerät mit Rührbottich (10) nach Anspruch 11 und Anspruch 6 oder 7, wobei die Spülungsmittel (60, 62, 64, 66, 70, 240) einen mittleren Hohlraum (240) umfassen, der zwischen der Antriebsumgebung und dem ersten Abschnitt (32) angeordnet ist.

13. Gerät mit Rührbottich (10) nach Anspruch 12, wobei die Spülungsmittel (60, 62, 64, 66, 70, 240) mindestens eine Leitung (60, 62, 64, 70) umfassen, die in den mittleren Hohlraum (240) einmündet, um eine Spülflüssigkeit einzuspritzen oder abzuleiten.

14. Gerät mit Rührbottich (10) nach Anspruch 12, wobei die Spülungsmittel (60, 62, 64, 66, 70, 240) mindestens eine Leitung (60, 64) umfassen, die in einen ringförmigen Zwischenbereich (36) einmündet, der zwischen den zwei Abschnitten (32, 34) angeordnet ist, um eine Spülflüssigkeit einzuspritzen oder abzuleiten.
